# EUROPEAN PATENT SPECIFICATION

(11) **EP 4 377 251 B1**
(45) Date of publication and mention of the grant of the patent: **08.04.2026**
(21) Application number: 22751402.3
(22) Date of filing: 27.07.2022
(51) Int. Cl.: B66C 23/52, B66C 23/64, F03D 13/10, F03D 13/25

(54) **CRANE BOOM PROVIDED WITH A TAGLINE SYSTEM**
KRANAUSLEGER MIT EINEM ETIKETTSYSTEM
FLÈCHE DE GRUE POURVUE D'UN SYSTÈME DE CÂBLE STABILISATEUR

(30) Priority: 30.07.2021 NL 2028886
(43) Date of publication of application: 05.06.2024
(73) Proprietor: Itrec B.V., 3115 HH Schiedam (NL)
(72) Inventor: WIECK, Bart Otto Fredrik, 3115 HH SCHIEDAM (NL); VAN DER LINDE, Adrianus, 3115 HH SCHIEDAM (NL)
(74) Representative: EP&C
(86) International application number: PCT/EP2022/071027
(87) International publication number: WO 2023/006796

(56) References cited:
- EP-A1- 2 889 251
- WO-A1-2018/208158
- DE-A1- 102011 015 881
- ANONYMOUS: "Crane on Discovery", REQUEST FOR APPROVAL (PROJECT NR. 101371), 31 October 2012 (2012-10-31), pages 1 - 17, 1, XP055386549

## Description

The present invention relates to the field of cranes having a crane boom that is provided with a tagline system for controlling a load lifted by the crane, e.g. a wind turbine component, e.g. a wind turbine rotor blade that is lifted in a horizontal orientation.

An example of a crane is shown in EP 2 889 251. This document, e.g. in figure 1 thereof, discloses a crane with a crane boom having a length, which crane boom is provided with a tagline system for controlling a load lifted by the crane, e.g. a wind turbine component, e.g. a wind turbine rotor blade in horizontal orientation. The tagline system comprises a guide wire assembly with a guide wire extending along the boom, the guide wire having a lower end and an upper end. A tensioning winch is connected to the lower end of the guide wire and the upper end is secured to the crane boom at an anchoring point. The crane boom further has a tagline assembly, which comprises:
- a tagline,
- a tagline winch for the tagline,
- a travelling block that is mounted on the guide wire for travel along the guide wire.

EP 2 889 251 also discloses that the tagline system comprises a top traverse which is mounted on the crane boom and projects from the crane boom. The top traverse provides, at a spacing from the crane boom, a support point for the guide wire close to its upper end.

The dimensions of wind turbines have steadily increased over the recent years, mainly in view of economical efficient energy generation. As a result, wind turbines having a capacity over 10 MW, e.g. 14 MW or recently 15 MW are now commercially available. These wind turbines have very large rotor blades, e.g. over 75m, or even over 100m in length. For example, each blade of the newly proposed Vestas 15 V236 turbine measures 115.5 meters in length. The Siemens Gamesa's SG 14-222 DD direct drive turbine has a blade of 108 meters in length. This market development further increases demands on the installation of a rotor blade to an offshore wind turbine. The mass of a single blade may be well in excess of 50 tons.

Due to the mass and dimensions of the present day wind turbine rotor blades, and the height of the nacelle and hub to which the rotor blade is to be fastened while suspended (via a blade lifting tool) from the crane, the forces that are to be absorbed/exerted by the tagline system are very significant. As the tagline effectively pulls the guide wire forward under load, the guide wire will deflect to an undesirable degree. The inventors note that tensioning of the guide wire to reduce deflection of the guide wires has its own limitations as well.

The invention aims to provide improvements of the known crane and operation thereof, in particular in view of behaviour of the tagline system when hoisting a significant load, e.g. to a significant height, e.g. when lifting a wind turbine rotor blade in horizontal orientation for fastening thereof to the hub of a (offshore) wind turbine.

The invention provides a method according to claim 1 for performing a lift operation wherein a load is lifted by means of a crane. The crane has a crane boom having a length, e.g. at least 80 meters in length, e.g. between 100 and 160 meters, which crane boom is provided with a tagline system for controlling the load that is lifted by the crane, e.g. a wind turbine component, e.g. a wind turbine rotor blade in horizontal orientation.

The tagline system comprises:
- a guide wire assembly with a guide wire extending along the boom, the guide wire having a lower end and an upper end, wherein a tensioning device, e.g. a tensioning winch, is connected to one of said lower end and upper end, and wherein the other of said lower and upper end is secured relative to the crane boom,
- a tagline assembly, comprising:
   - a tagline,
   - a tagline winch for the tagline,
   - a travelling block that is mounted on the guide wire for travel along the guide wire.

The tagline system further comprises a relocatable traverse, e.g. one per guide wire, which is configured to be mounted on the crane boom and to project from the crane boom, which relocatable traverse provides, at a spacing from the crane boom, a support for the guide wire.

The crane boom is provided with multiple traverse mounting locations that are spaced along the length of the crane boom.

The load is to be lifted in the lift operation to a predetermined lifting height, e.g. corresponding to the hub of a wind turbine when installing a rotor blade to the hub in horizontal orientation of the blade during the fastening to the hub.

Prior to the lifting of the load, the relocatable traverse is mounted to be crane boom at a selected one of the multiple traverse mounting locations, which selection is, preferably, made on the basis of the predetermined lifting height, e.g. such that the relocatable traverse is closely above a highest position of the travelling block of the tagline system when the load is lifted to said predetermined lifting height.

In an embodiment, - for moving the relocatable traverse from one traverse mounting location to another traverse mounting location on the crane boom, e.g. in preparation for a next lift operation - the relocatable traverse is dismounted from the one traverse mounting location on the crane boom whilst remaining engaged to the guide wire, and wherein the relocatable traverse is then slid along the guide wire to the other traverse mounting location, wherein the relocatable traverse is then mounted to said traverse mounting location.

In an embodiment, the crane boom is provided at each of said multiple traverse mounting locations with a traverse mounting device for the relocatable traverse, which traverse mounting devices are spaced along the length of the crane boom, and wherein the relocatable traverse is provided with a cooperating mounting device allowing to mount the relocatable traverse at a selected one of the multiple traverse mounting devices.

The method of claim 1 allows the operator to place the relocatable traverse at its most effective position along the crane boom in view of the lifting operation that is to be carried out. For instance, as preferred, the lifting height may be the decisive parameter when selecting the most effective position, e.g. the relocatable traverse being located on the boom as closely as possible above the maximum height position of the travelling block of the tagline during the lifting of the load. Thereby the guide wire is supported by this traverse in relative close proximity to the travelling block when the load has been lifted to its lifting height, e.g. the lifting height corresponding to the height of the hub to which the rotor blade is to be fastened. In the process of fastening the rotor blade, e.g. using nuts to be placed on bolts projecting from the root of the blade, the taglines may play a significant role in orienting and/or stabilizing the rotor blade relative to the hub.

In an embodiment, the crane boom is provided with at least three traverse mounting devices spaced along the length of the crane boom. For example, three, four or five discrete traverse mounting devices are present for each relocatable traverse. As explained herein, the mounting devices may be composed of one or more tabs having a hole, e.g. the tabs being welded on main chords of the crane boom. Other mounting devices, e.g. having a socket into which a mating spigot-member of the relocatable traverse is introduced, are also possible.

In an embodiment, the multiple traverse mounting devices are spaced along the length of the crane boom by at least 5 meters from one another, e.g. between 8 and 12 meters from one another.

In an embodiment, the crane has an uppermost traverse which is distinct from the relocatable traverse and which is mounted at a fixed location to the crane boom, closer to a tip of the boom than the possible mounting locations of the relocatable traverse, e.g. the guide wire passing from said uppermost traverse to an anchoring point on the crane boom.

In an embodiment, the crane boom has a central plane, and the tagline system is configured such that - in each of the mounting positions of the relocatable traverse -, e.g. as provided by the multiple traverse mounting devices, the lateral distance from the guide wire support provided by the relocatable traverse relative to the central plane is the same. For example, the relocatable traverse is configured and operated to be brought in different configurations thereof to compensate for different cross-sections, e.g. lateral widths, and/or thickness, of the crane boom at the various locations where the relocatable traverse is mountable on the crane boom.

In an embodiment, the relocatable traverse is composed of a frame member that is to be connected to a front main chord of the crane boom, e.g. via a cooperating mounting device to a selected one of multiple traverse mounting devices that are spaced along the length of the crane boom and provided on a front main chord of the crane boom, wherein the relocatable traverse is further composed of a brace member that is hinged to the frame member, which brace member is to be connected to a rear main chord of the crane boom, e.g. via a respective mounting device thereof to a selected one of multiple traverse mounting devices that are spaced along the length of the crane boom and provided on a rear main chord of the crane boom.

For example, the frame member and the brace member are configured to include different angles relative to one another when mounted at the various mounting, e.g. to compensate for a different cross-section, e.g. lateral width, of the crane boom at the various mounting locations.

In an embodiment, the relocatable traverse is provided with an eye through which the guide wire extends, e.g. a closed eye or an openable eye allowing for lateral insertion and/or removal of the guide wire into and out of the eye.

In an embodiment, the relocatable traverse is provided with a releasable clamp that clamps the guide wire, e.g. a releasable clamp.

In an embodiment, the crane boom has multiple traverse mounting devices, that each comprise one or more tabs having a hole, the tabs being fitted to chords of the crane boom, wherein the relocatable traverse is provided with a cooperating or mating mounting device, e.g. one or more tabs having a hole, allowing to mount the traverse at a selected one of the multiple traverse mounting devices, e.g. a bolt being mounted through the tabs on the chord and the traverse.

In an embodiment, the crane boom has parallel front and rear main chords extending along a lateral side thereof with lattice members between said front and rear main chords, wherein the front main chord of the crane boom is provided with multiple traverse mounting devices spaced along the length of the crane boom,
and wherein the relocatable traverse comprises an A-frame part with two leg members adjoining at an apex and at least one transverse member between the leg members, wherein the A-frame part, e.g. each leg member thereof, is provide - remote from the apex - with a cooperating or mating mounting device that is mountable to said one or more traverse mounting devices on the front main chord,
and wherein the rear main chord of the crane boom is provided with a multiple traverse mounting device spaced along the length of the crane boom,
and wherein the relocatable traverse comprises a brace member that is coupled to the apex of the A-frame at one end thereof, and that is provided remote from said one end with a cooperating or mating mounting device that is mountable to said one or more traverse mounting devices on the rear main chord.

For example, the A-frame is provided at the apex with an eye or clamp for the guide wire.

The invention also relates to a crane according to claim 7. Herein the tagline system further comprises at least one relocatable traverse which is configured to be mounted on the crane boom and to project from the crane boom, which relocatable traverse provides, at a spacing from the crane boom, a support for the guide wire,
wherein the crane boom is provided with multiple traverse mounting locations that are spaced along the length of the crane boom,
such that the tagline system allows to, in use, - prior to the lifting of the load - mounting of the relocatable traverse to be crane boom at a selected one of the multiple traverse mounting locations, e.g. such that the relocatable traverse is closely above a highest position of the travelling block of the tagline system when the load is lifted to a predetermined lifting height.

In an embodiment, - for moving the relocatable traverse from one traverse mounting location to another traverse mounting location on the crane boom, e.g. in preparation for a next lift operation - the relocatable traverse is configured to be dismounted from the one traverse mounting location on the crane boom whilst remaining engaged to the guide wire, and wherein the relocatable traverse is then slidable along the guide wire to the other traverse mounting location, wherein the relocatable traverse is then mountable to said traverse mounting location.

In an embodiment, the crane boom is provided at each of said multiple traverse mounting locations with a traverse mounting device for the relocatable traverse, which traverse mounting devices are spaced along the length of the crane boom, wherein the relocatable traverse is provided with a cooperating mounting device allowing to mount the relocatable traverse at a selected one of the multiple traverse mounting devices.

Further embodiments of the crane according to the invention are disclosed in the subclaims and in the description, e.g. with reference to the figures.

It is envisaged, for example, that one pair of taglines is used when performing a lift operation to control the load primarily in a horizontal plane, e.g. to control rotation of the load about a hoist cable from which the load is suspended. The other pair of taglines is primarily used for control of the load in a vertical plane, e.g. to control orientation of the load about a horizontal axis. The provision of four tagline systems, each having its own guide rail or guide wire, travelling block, and tagline, allows to use the two pairs for control of the load in horizontal plane and vertical plane respectively.

For example, the outermost tagline assemblies of the four are used for control of the load in the vertical plane, so rotation about a horizontal axis (which extends in practice in the central plane of the crane boom).

For example, the innermost tagline assemblies of the four are used for control of the load in the horizontal plane, e.g. rotation of the load about a vertical axis formed by the hoist cable or cables from which the load is suspended.

For example, during a lift operation performed by a crane, one pair of travelling blocks is at a lower level than the other pair of travelling blocks. For example, the travelling blocks of the tagline assemblies used for control in the vertical plane of the load, are higher up along the crane boom during the lift operation than the travelling blocks of the tagline assemblies used for control in the horizonal plane of the load.

As explained, in embodiment, the load could be a blade lifting tool used for lifting a rotor blade of a wind turbine, e.g. in horizontal orientation.

As explained, the travelling blocks could be configured to follow the load during the lift operation up along the boom, so a passive motion along the respective guide member. In another embodiment, one or more, e.g. one pair of the travelling blocks, could be actively driven along the respective guide member.

In practical embodiments of the tagline system, the four guide members extending along the crane boom could be embodied as four guide wires, two guide wires and two guide rails, or four guide rails mounted to the crane boom.

In the drawings:
- Fig. 1 shows a in view onto the rear side thereof a crane boom of a crane according to the invention,
- Fig. 2 shows the crane boom of figure 1 in a side view,
- Figs. 3a, b show an enlargement of the inner section of the crane boom shown in figures 1 and 2,
- Fig. 4 shows a cross-section A-A of the crane boom in figure 3b,
- Figs. 5a, b show an enlargement of a central section of the crane boom shown in figures 1 and 2,
- Figs. 6a,b show an enlargement of a tip section of the crane boom shown in figures 1 and 2,
- Figs. 7, 8 show in a side view a portion of the crane boom of figure 2 the relocatable traverse at a mounting position and a further mounting position for the relocatable traverse,
- Fig. 9 shows the uppermost traverse of the crane boom of figures 1 and 2,
- Fig. 10 shows the relocatable traverse of the crane boom of figures 1 and 2,
- Figs. 11a,b,c,d shows the relocatable traverse of the crane boom of figures 1 and 2 when mounted at the various mounting positions,
- Figs. 12a,b,c, d illustrate the relocation of the relocatable traverse of the crane boom of figures 1 and 2 from one mounting position to another,
- Figs. 13a, b show, in a view corresponding to figure 1, alternative embodiments of a crane boom of a crane according to the invention,
- Fig. 14 shows a jack-up vessel equipped with a crane having the boom of figures 1 and 2,
- Figs. 15a, b illustrate a crane on a jack-up vessel equipped with a tagline system as described herein when lifting a rotor blade of an offshore horizontal axis wind turbine,
- Figs. 16a, b illustrate a crane boom according to the invention.

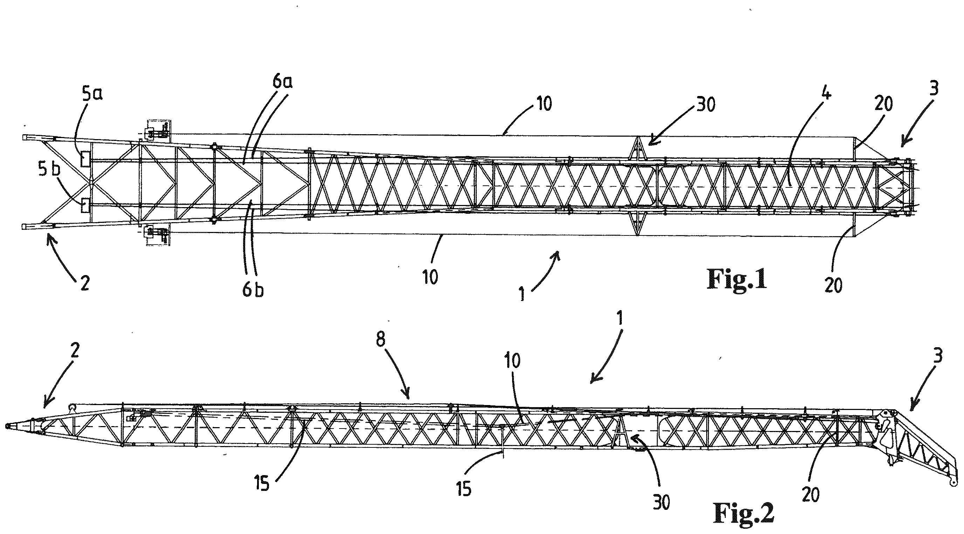

In the figure 1 a latticed crane boom 1 is shown for a crane which is not further depicted, e.g. a crane having a slewable crane housing to which the boom is pivotally mounted at its inner end 2 to perform a luffing motion about a horizontal axis.

The crane boom 1 has a length extending from its inner end 2 to a boom tip 3.

The depicted crane boom 1, shown to scale in the figures, is about 145 meters in length. As explained in the introduction, the continued increase of dimensions of (offshore) wind turbines, requires lifting operations to very large heights, which requires enormous boom lengths and places increased demands on control of the load, e.g. the rotor blade, during the lifting, and/or during fastening the blade to the hub of the wind turbine. In embodiments, the boom is at least 80 long, e.g. between 100 and 160 meters.

The crane boom 1 has a central plane 4.

The crane boom 1 is shown with hoist winches 5a,b that drive hoist cables 6a,b of the crane that extend along the length of the boom, e.g. connected to a crane hook from which a load is to be suspended to perform a lifting operation, e.g. a rotor blade of a wind turbine that is to be lifted (or lowered) in a horizontal orientation thereof.

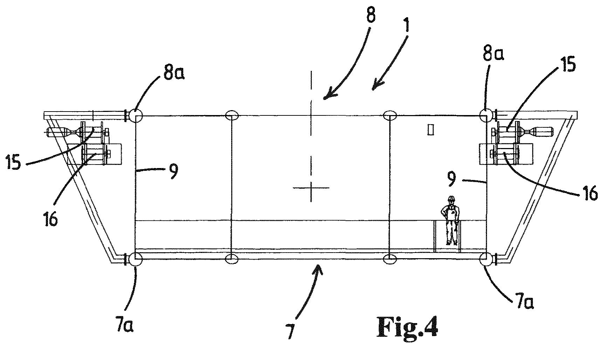

The crane boom 1 has a front side 7, which faces downwards when the boom 1 is on a substantially horizontal boom rest position, and an opposed rear side 8. The figure 4 illustrates that at each lateral side of the latticed boom 1 there is a front main chord 7a and a rear main chord 7b, interconnected by lattice members 9.

Generally, the crane boom 1 is provided with a tagline system for controlling a load lifted by the crane, e.g. a wind turbine component, e.g. a wind turbine rotor blade in horizontal orientation. The use of a tagline system on a crane boom is well-known.

At each lateral side of the crane boom, the tagline system comprises, at each lateral side of the boom, a guide wire assembly with a guide wire 10 extending along the boom 1. The guide wire, e.g. a steel wire, has a lower end and an upper end. A tensioning winch 11 is mounted on the boom 1 and is connected to the lower end of the guide wire. The upper end is secured relative to the crane boom 1, e.g. at an anchoring point.

The tagline system comprises, at each lateral side of the boom, a tagline assembly which comprises:
- a tagline 15,
- a tagline winch 16 mounted on the crane boom 1 for the tagline 15,
- a travelling block 17 that is mounted on the guide wire 10 for travel along the guide wire 10, here with sheaves for the tagline 15.

In the depicted embodiment, as preferred in practice, the tagline winch 16 engages on the lower end of the tagline 15. The winch 16, like the winch 11, is mounted in a winch frame that is secured to the crane boom and may have a drum for the tagline as is known in the art.

The upper end of the tagline 15 is anchored relative to the boom, as is preferred.

The tagline system as illustrated by way of example here, includes a further block 18 with a sheave for the tagline, so that the tagline runs from the block 17 to the block 18 and back again. This further block 18 is connected to the load that is to be lifted by the crane. This arrangement is known in the art.

By operating the winch 16, the distance between the blocks 17, 18 can be adapted, and thereby the orientation and/or position of the load that is lifted by the crane is controlled.

When the load is lifted or lowered by the one or more hoisting winches 4 of the crane, the tagline block 15 follows, guided by the guide wire 10 along the boom. In another embodiment, the block 15 is actively driven along the guide wire 10, e.g. by a further arrangement of a winch and a drive cable connected to the travelling block 15, as is also known in the art.

At each lateral side of the crane boom, the tagline system further has an uppermost traverse 20 which is mounted at a fixed location to the crane boom 1, here in proximity to the tip of the crane boom. The uppermost traverse 20 is mounted on the crane boom, projects from the crane boom, and provides, at a spacing from the crane boom, a support for the effective top zone of the guide wire 10, e.g. so that the guide wire 10 extends substantially parallel to the central plane of the crane boom.

In the depicted embodiment, the guide wire 10 is supported by this uppermost traverse 20 and the upper end of the guide wire is secured to an anchoring point 21 on the tip of the crane boom. In another embodiment, the upper end of the guide wire is secured to the uppermost traverse 20, e.g. with a further stabilizing wire extending from the traverse 20 to an anchoring point on the main boom.

The tagline 15 here is secured at its upper end to the uppermost traverse 20.

The crane boom 1 is provided with multiple, here four, discrete traverse mounting devices 25, 26, 27, 28 spaced along the length of the crane boom, e.g. all located in the top half of the main boom 1.

In addition to the fixed location uppermost traverse 20, the tagline system comprises at each lateral side of the crane boom 1, a relocatable traverse 30. As preferred, just one relocatable traverse 30 is present per guide wire 10, e.g. in addition to a fixed uppermost traverse 20.

Generally, the relocatable traverse 30 is configured to be mounted on the crane boom 1 and to project from the crane boom in order to provides, at a spacing from the crane boom, a support point for the guide wire 10, which wire 10 than extends above and below the relocatable traverse 30.

In more detail, the relocatable traverse 30 at each lateral side of the crane boom 1 is provided with a cooperating or mating mounting device 31 allowing to mount the relocatable traverse 30 at a selected one of the multiple traverse mounting devices 25, 26, 27, 28 spaced along the crane boom 1.

It is illustrated that the multiple traverse mounting devices 25, 26, 27, 28 are spaced along the length of the crane boom by at least 5 meters from one another, e.g. evenly spaced, e.g. spaced between 8 and 12 meters from one another, e.g. by 11.5 meters in this embodiment.

The uppermost traverse mounting device 28 for relocatable traverse 30 is spaced below the fixed uppermost traverse 20, e.g. by the same spacing as the other devices 25, 26, 27.

It is envisaged that, when the crane having the boom 1 and tagline system as discussed above, is used to perform a lift operation of a load, wherein the load is to be lifted in the lift operation to a predetermined lifting height, e.g. to the height of a hub or nacelle of a wind turbine, the selection of the traverse mounting device to which the relocatable traverse 30 is mounted is made on the basis of the predetermined lifting height. For example, the relocatable traverse 30 is mounted at the mounting location on the boom 1 which is closely above a highest position of the travelling block 15 of the tagline system when the load is lifted to this predetermined lifting height, and the relocatable traverse 30 is mounted at this selected mounting position of the crane boom 1.

So, for a lift operation wherein the lifting height is very great, the relocatable traverse 30 is mounted at the traverse mounting device 28, so that the block 15 can travel all the way up along the guide wire 10 to a maximum height fairly close to the relocatable traverse 30. Then this relocatable traverse supports and thus stabilizes the guide wire 10 effectively, avoiding undue deflection of the guide wire 10 which might occur if there was no relocatable traverse other than the fixed uppermost traverse 20. The deflection might otherwise unduly impair the accuracy of the position and/or orientation of the load that is suspended from the cable 6a,b of the crane.

It will be appreciated that when the lifting is done to a lower lifting height, the relocatable traverse 30 will be mounted at one of the lower lying mounting devices 25, 26, 27 on the crane boom.

It is illustrated that the tagline system is configured such that - in each of the positions of the relocatable traverse 30 provided by the multiple traverse mounting devices 25, 26, 27, 28 - the lateral distance from the guide wire support provided by the relocatable traverse relative to the central plane is the same.

As can be seen in figure 1, the cross-section of the crane boom 1 may vary over the length, in particular in the region where the multiple traverse mounting devices 25, 26, 27, 28 are present, which variation may be small (as here) yet noticeable, e.g. in width and/or in thickness (e.g. at the tapering of the boom towards the tip thereof).

As will be discussed in more detail below by way of example, it is envisaged that the relocatable traverse 30 is configured to be brought in different configurations thereof to compensate for different cross-section, e.g. lateral width, of the crane boom 1 at the various locations of the multiple traverse mounting devices 25, 26, 27, 28.

As is illustrated, and as preferred, the relocatable traverse 30 is composed of a frame member 35 that is to be connected via a mating mounting device thereof to a selected one of multiple traverse mounting devices 25, 26, 27, 28 spaced along the length of the crane boom as provided on the front main chord 7a of the crane boom. The relocatable traverse 30 is further composed of a brace member 39 that is hinged to the frame member 35 at a hinge that is remote from the mating mounting device of the frame 30. This brace member 39 is to be connecting via a mounting device thereof to a selected one of multiple traverse mounting devices 25, 26, 27, 28 spaced along the length of the crane boom and provided on a rear main chord 8a of the crane boom.

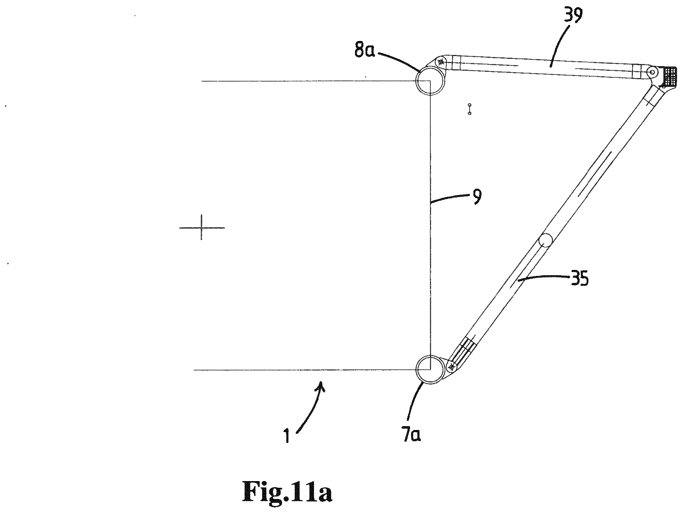

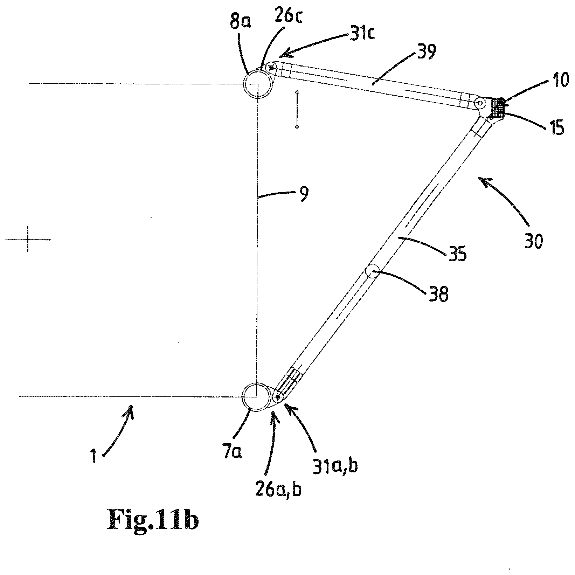

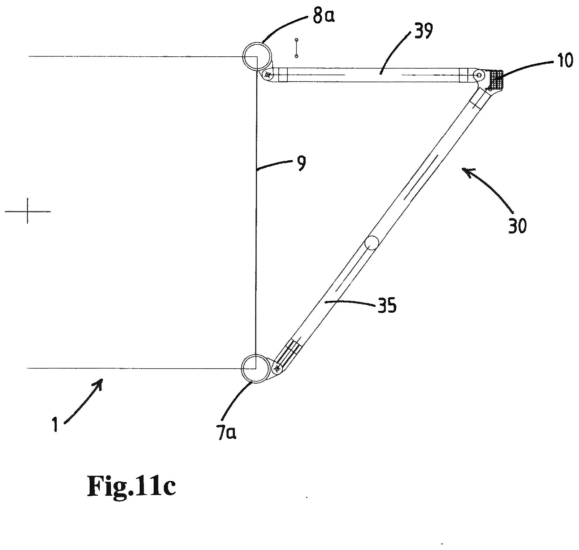

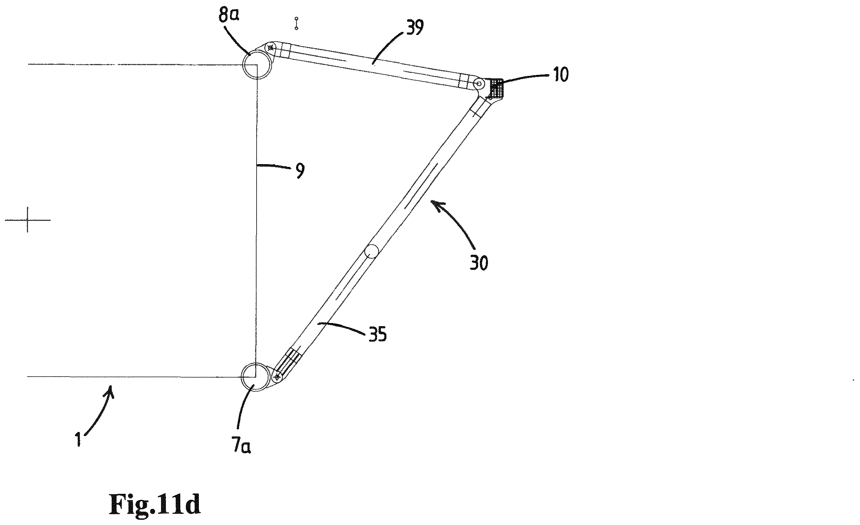

As depicted in figures 11a - d the frame member 35 and the brace member 39 include different angles relative to one another when mounted at the various locations of the multiple traverse mounting devices 25 (fig11a), 26 (fig. 11b), 27 (fig. 11c), 28 (fig. 11d), so as to compensate for a different cross-section, e.g. lateral width and/or thickness, of the crane boom 1 at these locations of the multiple traverse mounting devices 25, 26, 27, 28. For example, in a top region of the boom, the main front and rear chords will come closer to one another as the thickness of the boom reduces towards the tip, which can then be absorbed by the structure of the relocatable traverse.

As preferred, none of the frame member 35 and the brace member 39 is telescopic to provide for such compensation, yet an embodiment wherein the traverse 30 includes one or more telescopic parts for such compensation are also envisaged as embodiments.

It is illustrated that the relocatable traverse 30 is provided with an eye through which the guide wire 10 extends, e.g. a closed eye or an openable eye allowing for lateral insertion and/or removal of the guide wire into and out of the eye.

It is illustrated that the relocatable traverse 30 is also provided with an eye through which the tagline 15 extends.

As shown, the multiple traverse mounting devices each comprises tabs 25a,b,c, 26a,b,c, etc., having a hole, which tabs are fitted to chords 7a, 8a of the crane boom 1.

As shown, the relocatable traverse 30 is provided with a mating mounting device, e.g. a tab or pair of tabs 31a,b,c having a hole, allowing to mount the relocatable traverse 30 at a selected one of the multiple traverse mounting devices 25,26,27,28 , e.g. a bolt being mounted through the tabs on the chord 7a, 8a, and the relocatable traverse 30.

In more detail, the frame 35 is an A-frame part with two leg members 36, 37 adjoining at an apex and at least one transverse member 38 between the leg members. Each leg member 36, 37 is provided at one end remote from the apex with a mating mounting device, here a pair of tabs 31a, b between which a tab 25a, b is received, with a bolt being mounted through the aligned holes in the tabs.

The brace member 39, preferably embodied as a single rod, is coupled to the apex of the A-frame 35 at one end thereof. Remote from said one end the member 39 is provided with a mating mounting device 31c that is mountable to said one or more traverse mounting devices 25c on the rear main chord 8a, for example.

The A-frame 35 is provided at the apex with an eye or clamp for the guide wire 10.

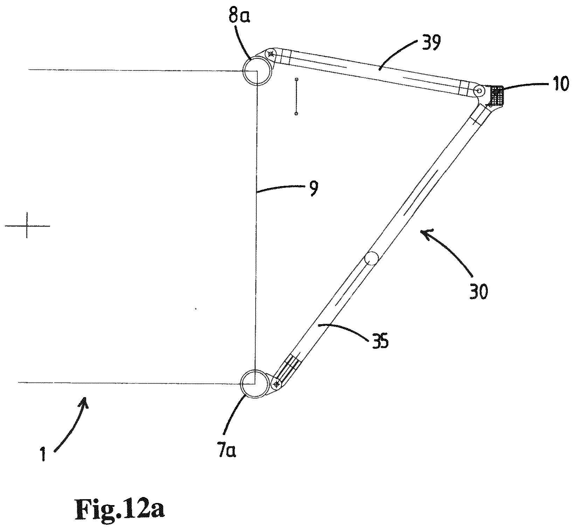

The figures 12a-d illustrate how the relocatable traverse 30 can be relocated on the crane boom, whilst remaining engaged with the guide wire 10, here also with the tagline 15. This operation is preferably done with the crane boom 1 in a boom rest position, e.g. in a substantially horizontal position. The relocation operation of the relocatable traverse 30 may be assisted by a relatively small crane, e.g. a mobile crane that rides over a deck of a vessel equipped with the crane having the crane boom as described herein.

It is noted that in practical embodiments, a single relocatable traverse 30 may weigh more than 500 kg, e.g. some 900 kg, e.g. at most 1500 kg, due to its size and strength requirements.

In figure 12a, the relocatable traverse 30 is shown at one of the discrete positions thereon on the crane boom, here at device 25, and engaged with the guide wire 10. Then the relocatable traverse 30 is dismounted from the one traverse mounting device 25 on the crane boom whilst remaining engaged to the guide wire 10.

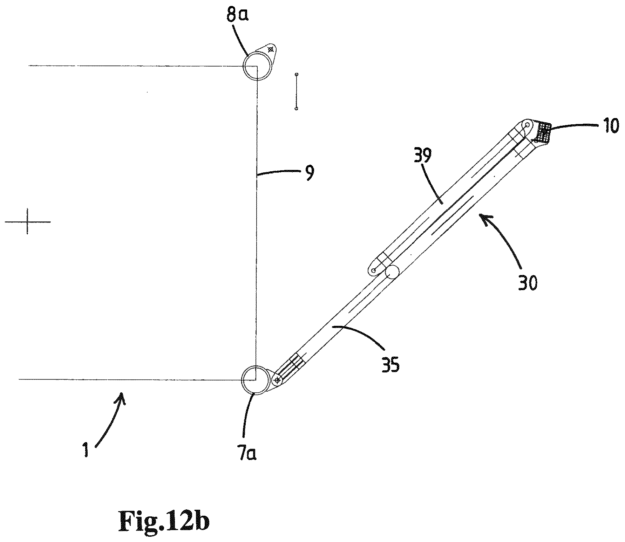

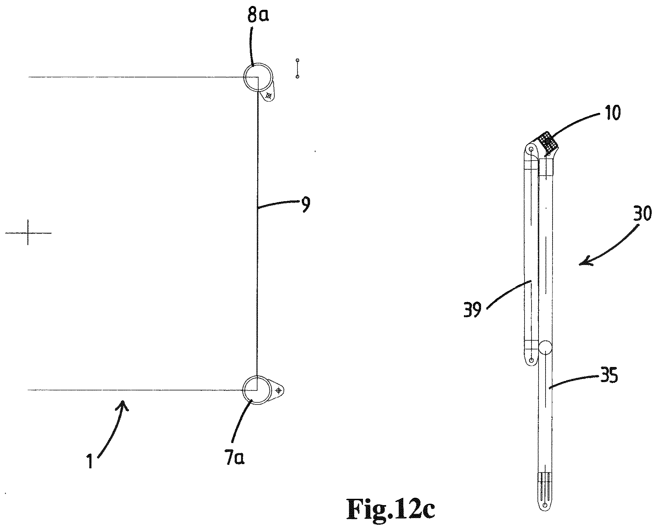

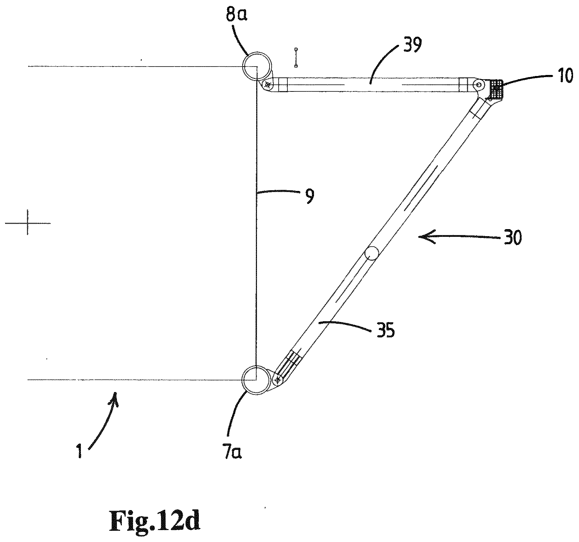

Starting from figure 12a, the brace member 39 is first supported (e.g. by the auxiliary crane) and then disconnected at one end thereof from the boom. Figure 12b then shows that the articulated or hinged relocatable traverse 30 is folded, as the brace member 39 is placed onto the A-frame member 35 that is still attached to both the boom and the guide wire. The guide wire may be slacked. Then the A-frame is released from the boom 1 so that the traverse 30 becomes suspended from the (slacked) guide wire, see figure 12c. The released relocatable traverse 30 is then slid along the guide wire 10, here also along the tagline 15, to one of the multiple traverse mounting devices on the crane boom, e.g. 27. Then the relocatable traverse 30 is mounted to said traverse mounting device, see figure 12d. The guide wire may be re-tensioned.

Whilst the presence of an uppermost traverse 20 is preferred, one may envisage that such traverse 20 is absent and that only the relocatable traverse 30 as discussed herein is provided.

The crane boom may have two legs, e.g. latticed legs, e.g. parallel latticed legs, instead of the illustrated single.

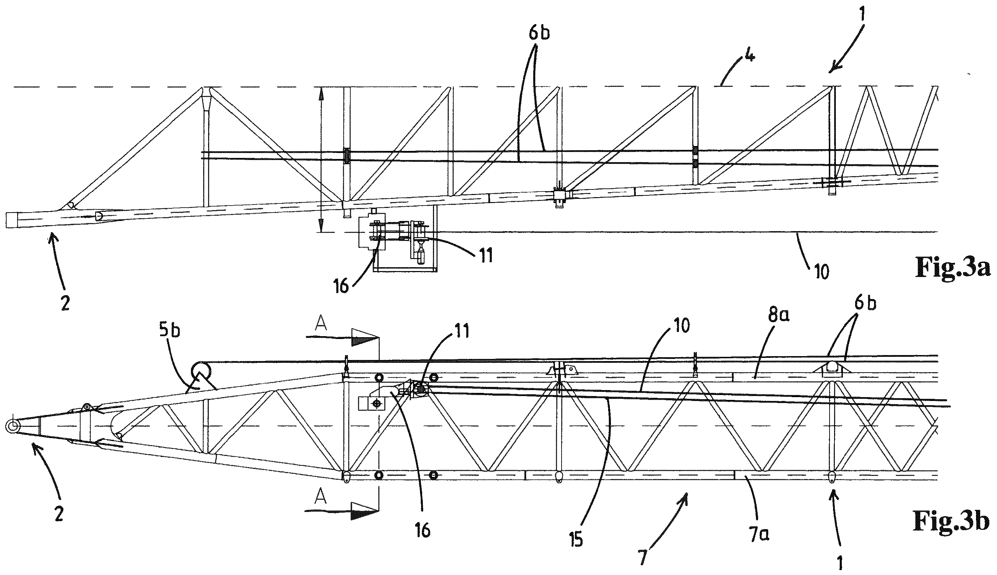

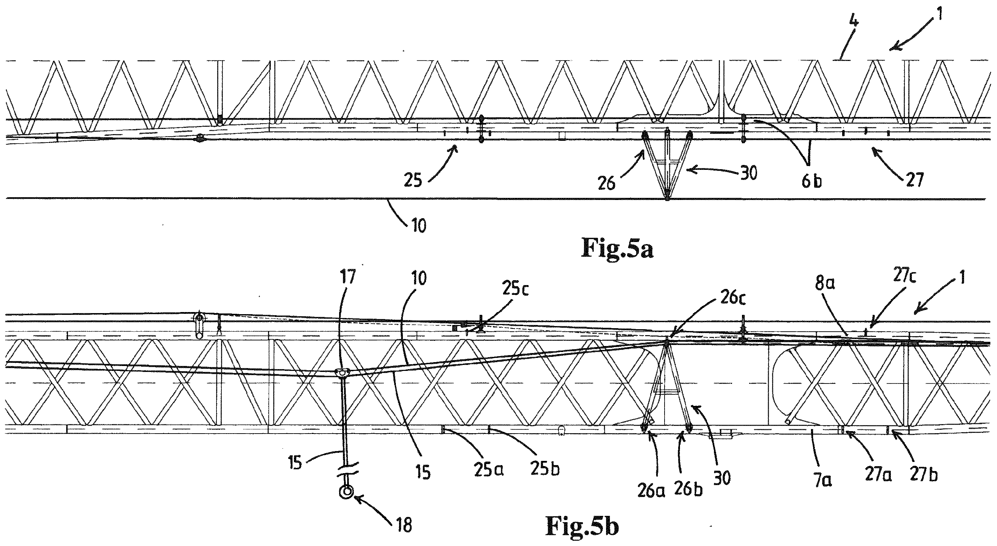

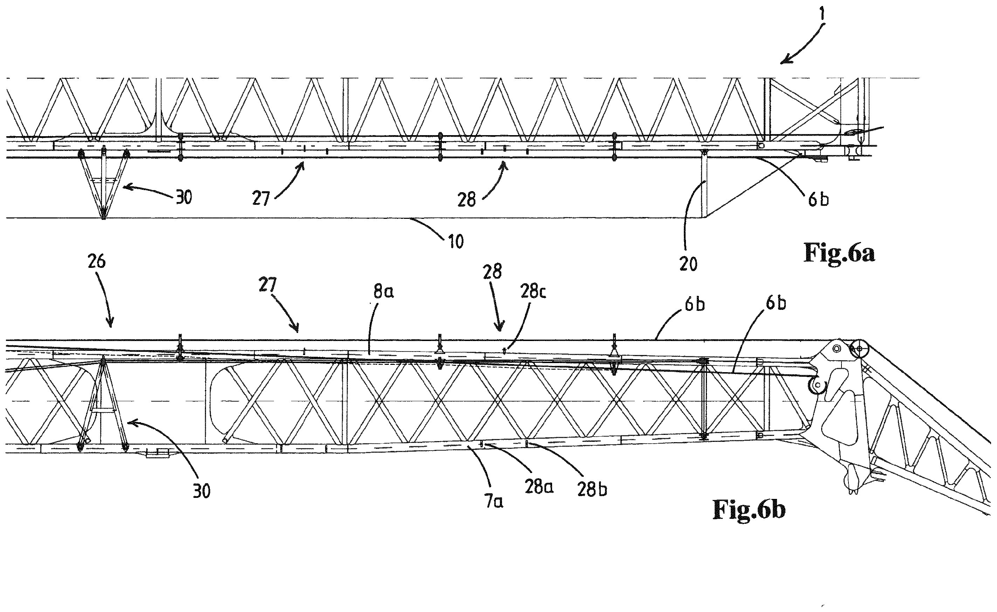

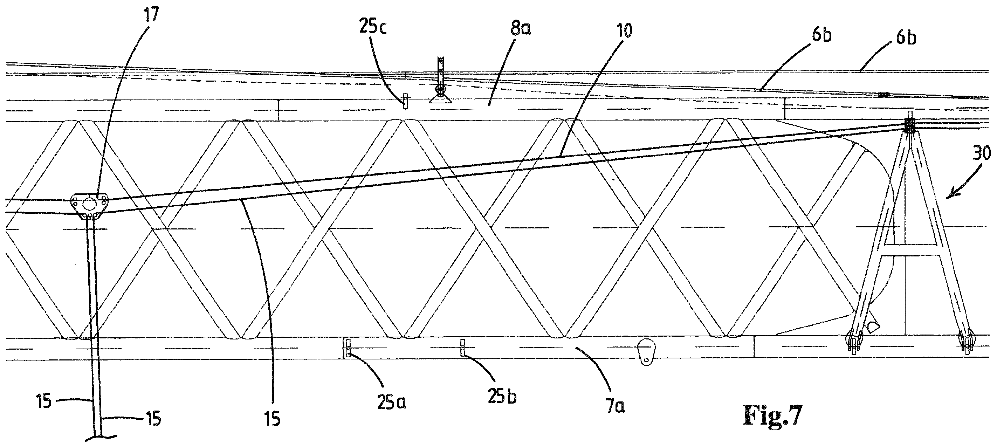

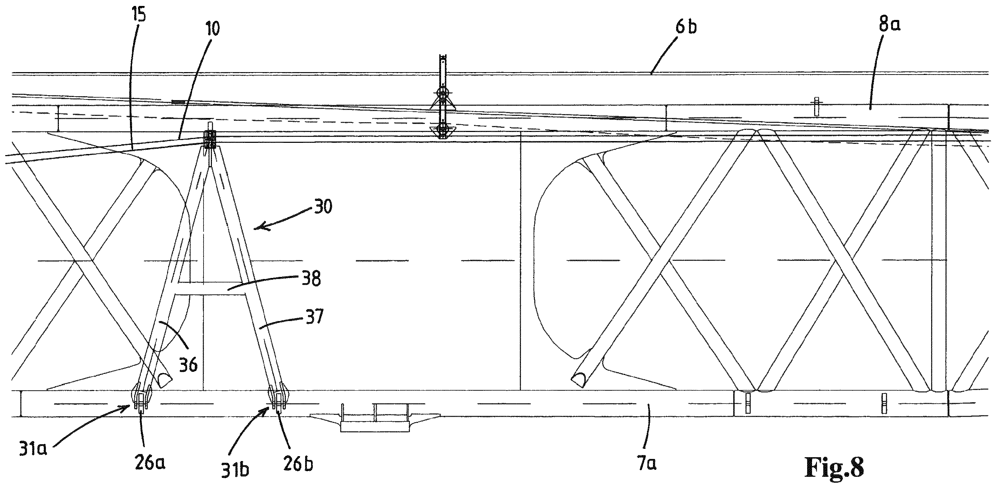

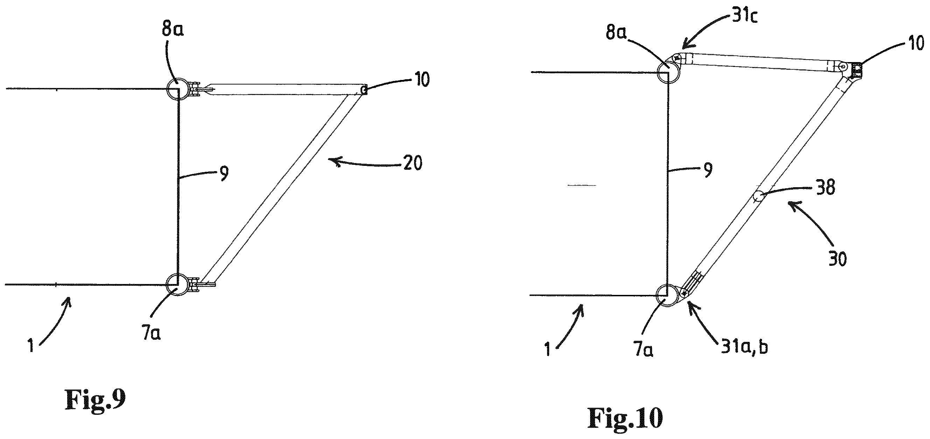

The crane boom may be equipped with four tagline assemblies instead of two as shown in figures 1 - 12. For example, two pairs of tagline assemblies are provided, each pair at a lateral side of the crane boom so that four guide wires and four associated taglines are available for control of the load that is to be lifted by the crane. In an embodiment, the relocatable traverse 30 locally supports the pair of guide wires at that side of the crane boom. In another embodiment, there is a dedicated relocatable traverse 30 for each guide wire of a pair of guide wires, e.g. allowing one relocatable traverse to be placed at a different position along the boom than the other relocatable traverse, e.g. in view of the height that is reached by the associated travelling block that travels over the guide wire during a lift operation performed with the crane.

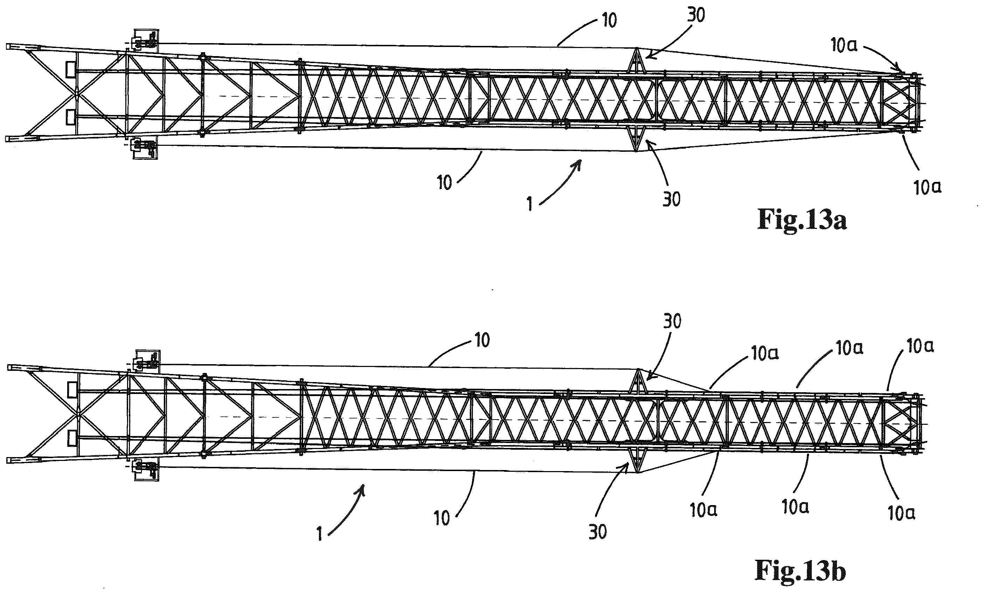

Figure 13a shows an embodiment, wherein the uppermost traverse 20 discussed above is absent. The relocatable traverse 30 can be mounted at a selected one of multiple mounting positions along the boom 1, where said boom is provided with a cooperating mounting device for the traverse 30. The guide wire 10 is anchored at an anchoring device 10a in proximity of the boom tip of the crane boom.

Figure 13b shows an embodiment, wherein the uppermost traverse 20 discussed above is absent. The relocatable traverse 30 can be mounted at a selected one of multiple mounting positions along the boom 1, where said boom is provided with a cooperating mounting device for the traverse 30. The guide wire 10 can be anchored at various anchoring devices 10a distributed along the length of the boom 1, depending on where the relocatable traverse 30 is placed.

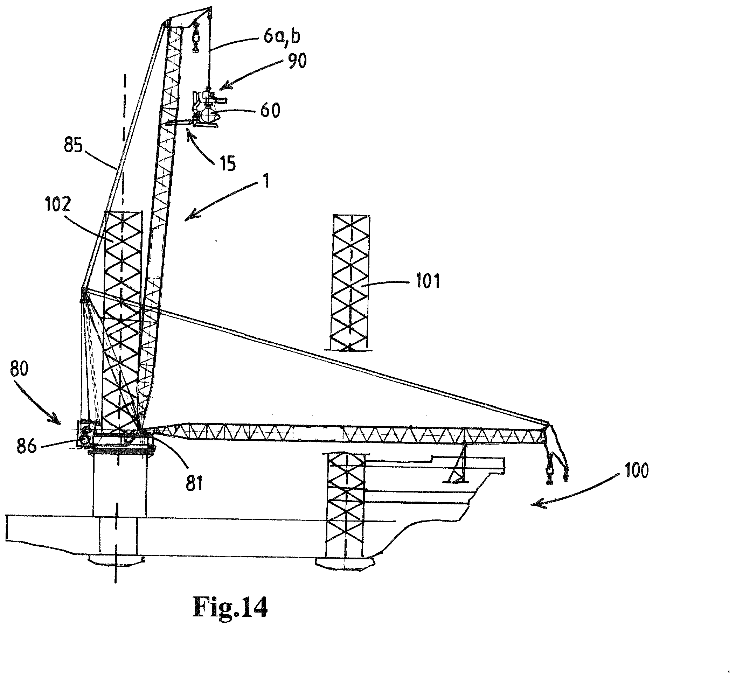

Figure 14 shows a jack-up vessel 100 that is equipped with a crane 80 having the boom 1 of figures 1 and 2. The vessel has a hull and jack-up legs 101, 102 as is known in the art. The crane 80 here is embodied as an around-the-leg crane. The crane has a crane housing 81 that can slew about a slew axis and is supported on the hull of the vessel. The boom 1 is pivoted at its inner end relative to the housing 81.

The boom 1 can be pivoted up and down by a luffing mechanism, here comprising one or more luffing cables 85 and winches 86.

The figure 14 shows a blade lifting tool 90 that lifts a rotor blade 60 of a wind turbine in horizontal orientation, e.g. in view of fastening the blade with its root end to a hub of the horizontal axis wind turbine.

The tool 90 is suspended from the tip of the boom 1 by means of a winch driven hoist cable 6a,b, e.g. from a single hoist cable.

The tagline system of the crane boom 1 serves to control the blade lifting tool 90 and thereby the rotor blade 60. The tagline system may serve to control the orientation of the tool 90 in the horizontal plane, e.g. a rotation about the suspension from the cable 6a,b and/or the horizontal distance between the tool 90 and the boom 1.

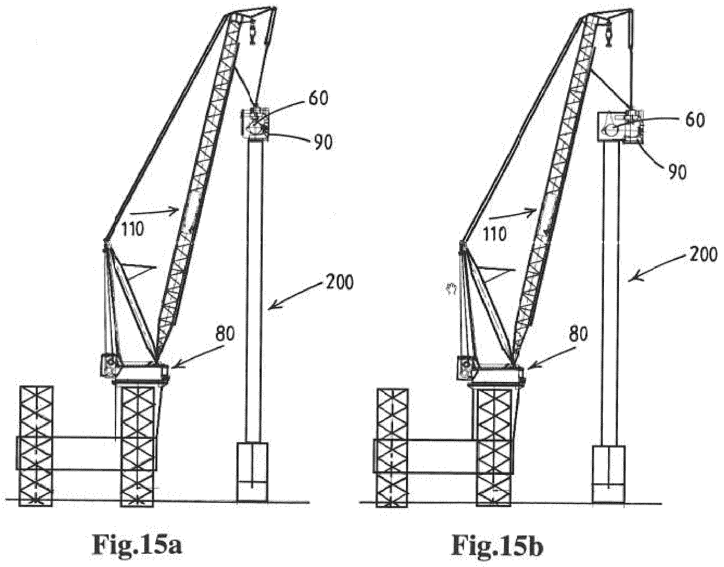

Figures 15a, b illustrate the use of a vessel, here a jack-up vessel, equipped with a crane having a crane boom 110 for the installation or de-installation of a rotor blade 60 of an offshore wind turbine 200. As discussed, this lift operation requires a very lengthy boom, in view of the height of the nacelle/hub for large capacity wind turbines. In these figures the blade lifting tool 90 is held in mirrored position. The orientation of the tool 90, and of the blade 60, is controlled by means of a tagline system as described herein.

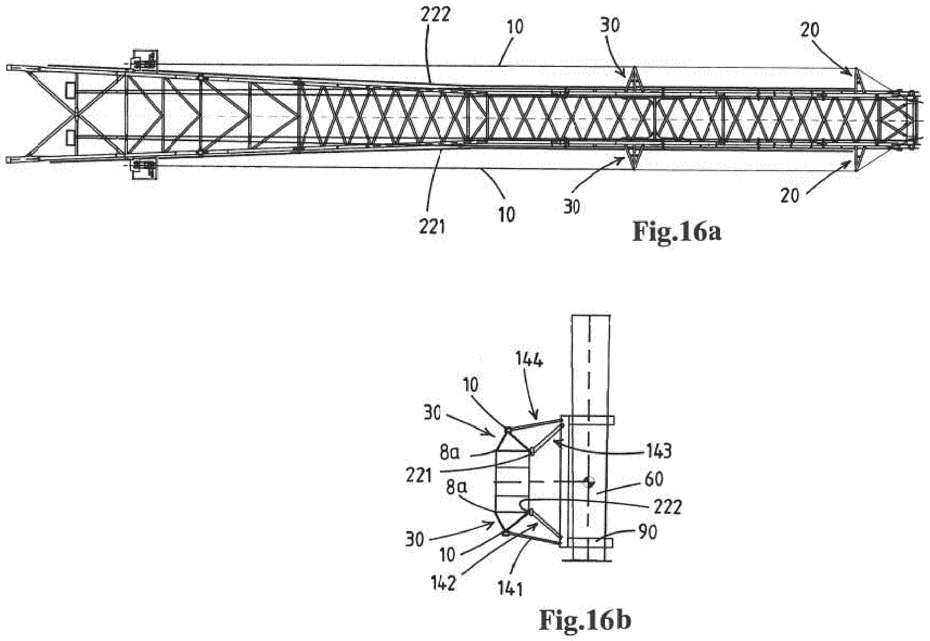

Figure 16a shows, in a view corresponding to figure 1, a hybrid design of the four guide members of the crane boom 210. Herein two guide wires 10, e.g. as described herein or of ordinary design as in mentioned EP 2 889 251, are combined with two guide rails 221,1222 that are secured on the structure of the crane boom 210, e.g. to the outermost main chords at the front side of the boom 210. This allows for a "four tagline assemblies design" of the tagline system of the crane boom, wherein the travelling blocks travel over their respective guide wire or guide rail.

Figure 16b shows the use of the hybrid design of figure 16a.

For example, the guide rails 221, 222 are associated with horizontal action tagline assemblies 142, 143, as the stability of the rails - compared to the guide wire 10 - contributes to the accuracy of the tagline control of the load in the horizontal plane. The guide wires 10 are the associated with vertical action tagline assemblies 141, 144 of the system, as deflection of these guide wires 10 has less of an effect on the control in this plane.

In embodiments, the load is controlled by a tagline system having five or six tagline assemblies, e.g. with a corresponding number of guide members on the crane boom. For example, in addition to taglines assemblies extending down from their travelling block on the guide member to the load and tagline assemblies extending substantially horizontally from their travelling block to the load, there may be one or two further tagline assemblies of which the travelling blocks are at a lower level so that the tagline extends upwards from the travelling block to the load.

In an embodiment, travelling blocks of tagline assemblies of which the taglines extend in a different direction towards the load, e.g. downwards and upwards, may share a guide member as the travelling blocks will then be spaced from one another on the guide member without the taglines interfering.

## Claims

1. Method for performing a lift operation, wherein a load is lifted by means of a crane with a crane boom having a length, which crane boom is provided with a tagline system for controlling the load that is lifted by the crane, e.g. a wind turbine component, e.g. a wind turbine rotor blade in horizontal orientation,
wherein the tagline system comprises:
- a guide wire assembly with a guide wire (10) extending along the boom, the guide wire having a lower end and an upper end, wherein a tensioning device, e.g. a tensioning winch (11), is connected to one of said lower end and upper end, and wherein the other of said lower and upper end is secured relative to the crane boom,
- a tagline assembly, comprising:
- a tagline (15),
- a tagline winch (16) for the tagline,
- a travelling block (17) that is mounted on the guide wire (10) for travel along the guide wire,
**characterized in that**,
the tagline system further comprises at least one relocatable traverse (30) which is configured to be mounted on the crane boom and to project from the crane boom, which relocatable traverse provides, at a spacing from the crane boom, a support for the guide wire,
wherein the crane boom is provided with multiple traverse mounting locations (25-28) that are spaced along the length of the crane boom,
wherein the load is to be lifted in the lift operation to a predetermined lifting height,
and wherein - prior to the lifting of the load - the relocatable traverse (30) is mounted to the crane boom at a selected one of the multiple traverse mounting locations, which selection is, preferably, made on the basis of the predetermined lifting height, e.g. such that the relocatable traverse is closely above a highest position of the travelling block of the tagline system when the load is lifted to said predetermined lifting height.

2. Method according to claim 1, wherein - for moving the relocatable traverse from one traverse mounting location to another traverse mounting location on the crane boom, e.g. in preparation for a next lift operation - the relocatable traverse is dismounted from the one traverse mounting location on the crane boom whilst remaining engaged to the guide wire, and wherein the relocatable traverse is then slid along the guide wire to the other traverse mounting location, wherein the relocatable traverse is then mounted to said other traverse mounting location.

3. Method according to claim 1 or 2, wherein the crane boom is provided at each of said multiple traverse mounting locations with a traverse mounting device (25-28) for the relocatable traverse (30), which traverse mounting devices are spaced along the length of the crane boom, and wherein the relocatable traverse (30) is provided with a cooperating mounting device (31) allowing to mount the relocatable traverse at a selected one of the multiple traverse mounting devices.

4. Method according to any one or more of claims 1 - 3, wherein the tagline system has an uppermost traverse (20) which is distinct from the relocatable traverse (30) and which is mounted at a fixed location to the crane boom, closer to a tip of the crane boom than the traverse mounting locations for the relocatable traverse (30), wherein:
- the upper end of the guide wire is secured to the uppermost traverse, or
- the guide wire is supported by said uppermost traverse and the upper end of the guide wire is secured to an anchoring point on the crane boom.

5. Method according to any one or more of claims 1 - 4, wherein the crane boom has a central plane (4) and the tagline system is configured such that - at each of the mounting locations of the relocatable traverse (30), e.g. as provided by the multiple traverse mounting devices (25-28) - the lateral distance from the guide wire support provided by the relocatable traverse (30) relative to the central plane is the same, e.g. wherein the relocatable traverse (30) is configured and operated to be brought in different configurations thereof to compensate for different cross-sections, e.g. lateral widths, of the crane boom at the various locations where the relocatable traverse is mountable on the crane boom.

6. Method according to any one or more of claims 1 - 5, wherein the relocatable traverse is composed of a frame member (35) that is to be connected to a front main chord (7a) of the crane boom, e.g. via a cooperating mounting device (31a,b) to a selected one of multiple traverse mounting devices (25-28) that are spaced along the length of the crane boom and provided on a front main chord (7a) of the crane boom, and wherein the relocatable traverse (30) is further composed of a brace member (39) that is hinged to the frame member (35), which brace member is to be connected to a rear main chord of the crane boom, e.g. via a respective mounting device (31c) thereof to a selected one of multiple traverse mounting devices (25-28) that are spaced along the length of the crane boom and provided on a rear main chord of the crane boom.

7. A crane with a crane boom having a length, which crane boom is provided with a tagline system for controlling a load lifted by the crane, e.g. a wind turbine component, e.g. a wind turbine rotor blade in horizontal orientation,
wherein the tagline system comprises:
- a guide wire assembly with a guide wire (10) extending along the boom, the guide wire having a lower end and an upper end, wherein a tensioning device, e.g. a tensioning winch (11), is connected to one of said lower end and upper end, and wherein the other of said lower and upper end is secured relative to the crane boom,
- a tagline assembly, comprising:
- a tagline (15),
- a tagline winch (16) for the tagline,
- a travelling block (17) that is mounted on the guide wire (10) for travel along the guide wire,
**characterized in that**,
the tagline system further comprises at least one relocatable traverse (30) which is configured to be mounted on the crane boom and to project from the crane boom, which relocatable traverse provides, at a spacing from the crane boom, a support for the guide wire,
wherein the crane boom is provided with multiple traverse mounting locations (25-28) that are spaced along the length of the crane boom,
such that the tagline system allows to, in use, - prior to the lifting of the load - mount the relocatable traverse (30) to the crane boom at a selected one of the multiple traverse mounting locations, e.g. such that the relocatable traverse is closely above a highest position of the travelling block of the tagline system when the load is lifted to a predetermined lifting height.

8. Crane according to claim 7, wherein - for moving the relocatable traverse from one traverse mounting location to another traverse mounting location on the crane boom, e.g. in preparation for a next lift operation - the relocatable traverse is configured to be dismounted from the one traverse mounting location on the crane boom whilst remaining engaged to the guide wire, and wherein the relocatable traverse is then slidable along the guide wire to the other traverse mounting location, wherein the relocatable traverse is then mountable to said traverse mounting location.

9. Crane according to claim 7 or 8, wherein the crane boom is provided at each of said multiple traverse mounting locations with a traverse mounting device (25-28) for the relocatable traverse (30), which traverse mounting devices are spaced along the length of the crane boom, and wherein the relocatable traverse (30) is provided with a cooperating mounting device (31) allowing to mount the relocatable traverse at a selected one of the multiple traverse mounting devices.

10. Crane according to any one or more of claims 7 - 9, wherein the tagline system has an uppermost traverse (20) that is distinct from the relocatable traverse (30) and that is mounted at a fixed location to the crane boom, e.g. closer to a tip of the crane boom than the traverse mounting locations (25-28), wherein:
- the upper end of the guide wire is secured to the uppermost traverse, or
- the guide wire is supported by said uppermost traverse and the upper end of the guide wire is secured to an anchoring point on the crane boom.

11. Crane according to any one or more of claims 7 - 10, wherein the crane boom has a central plane (4) and the tagline system is configured such that - in each of the mounting positions of the relocatable traverse (30), e.g. as provided by the multiple traverse mounting devices (25-28) - the lateral distance from the guide wire support provided by the relocatable traverse relative to the central plane is the same, e.g. wherein the relocatable traverse (30) is configured to be brought in different configurations thereof to compensate for different cross-section, e.g. lateral width, of the crane boom at the various mounting locations.

12. Crane according to any one or more of claims 7 - 11, wherein the relocatable traverse (30) is composed of a frame member (35) that is to be connected to a front main chord (7a) of the crane boom, e.g. via a cooperating mounting device (31a,b) to a selected one of multiple traverse mounting devices (25-28) that are spaced along the length of the crane boom and provided on a front main chord (7a) of the crane boom, and wherein the relocatable traverse (30) is further composed of a brace member (39) that is hinged to the frame member (35), which brace member is to be connected to a rear main chord of the crane boom, e.g. via a respective mounting device (31c) to a selected one of multiple traverse mounting devices (25-28) that are spaced along the length of the crane boom and are provided on a rear main chord of the crane boom.

13. Crane according to any one or more of claims 7 - 12, wherein the relocatable traverse (30) is provided with an eye through which the guide wire (10) extends in use of the tagline system, e.g. a closed eye or an openable eye allowing for lateral insertion and/or removal of the guide wire into and out of the eye.

14. Crane according to claim 9, wherein the multiple traverse mounting devices (25-28) each comprises one or more tabs fitted to chords of the crane boom, which tabs have a hole, wherein the relocatable traverse is provided with a cooperating mounting device, e.g. a tab having a hole, allowing to mount the relocatable traverse at a selected one of the multiple discrete traverse mounting devices, e.g. a bolt being mounted through the tabs on the chord and the relocatable traverse.

15. Crane according to any one or more of claims 7 - 14, wherein the crane boom has parallel front and rear main chords (7a,8a) extending along a lateral side thereof with lattice members (9) between said front and rear main chords, wherein the front main chord of the crane boom is provided with multiple traverse mounting devices spaced along the length of the crane boom,
and wherein the relocatable traverse comprises an A-frame part (35) with two leg members (36) adjoining at an apex and at least one transverse member between the leg members, wherein the A-frame part, e.g. each leg member thereof, is provided - remote from the apex - with a cooperating mounting device that is mountable to said one or more traverse mounting devices on the front main chord,
and wherein the rear main chord of the crane boom is provided with multiple traverse mounting devices spaced along the length of the crane boom,
and wherein the relocatable traverse comprises a brace member (39) that is coupled to the apex of the A-frame at one end thereof, and that is provided remote from said one end with a cooperating mounting device that is mountable to said one or more traverse mounting devices on the rear main chord, for example, wherein the A-frame is provided at the apex with an eye or clamp for the guide wire.

## Patentansprüche

1. Verfahren zum Durchführen eines Hebevorgangs, wobei eine Last mittels eines Krans mit einem Kranausleger mit einer Länge angehoben wird, wobei der Kranausleger mit einem Leitseilsystem zum Steuern der vom Kran angehobenen Last, z. B. einer Windkraftanlagenkomponente, z. B. einem Windkraftanlagenrotorblatt mit horizontaler Ausrichtung, versehen ist,
wobei das Leitseilsystem Folgendes umfasst:
- eine Führungsseilanordnung mit einem Führungsseil (10), das sich entlang des Auslegers erstreckt, wobei das Führungsseil ein unteres Ende und ein oberes Ende aufweist, wobei eine Spannvorrichtung, z. B. eine Spannwinde (11), mit dem unteren Ende oder dem oberen Ende verbunden ist und wobei das andere des unteren und oberen Endes relativ zum Kranausleger befestigt ist,
- eine Leitseilanordnung, die Folgendes umfasst:
- ein Leitseil (15),
- eine Leitseilwinde (16) für das Leitseil,
- einen Fahrblock (17), der am Führungsseil (10) montiert ist, um entlang des Führungsseils zu fahren,
**dadurch gekennzeichnet, dass**
das Leitseilsystem ferner mindestens eine verlagerbare Traverse (30) umfasst, die dazu ausgelegt, an dem Kranausleger montiert zu werden und vom Kranausleger vorzustehen, wobei die verlagerbare Traverse in einem Abstand vom Kranausleger eine Abstützung für das Führungsseil vorsieht,
wobei der Kranausleger mit mehreren Traversenmontagestellen (25-28) versehen ist, die entlang der Länge des Kranauslegers beabstandet sind,
wobei die Last während des Hebevorgangs auf eine vorbestimmte Hubhöhe anzuheben ist
und wobei - vor dem Anheben der Last - die verlagerbare Traverse (30) an einer ausgewählten der mehreren Traversenmontagestellen am Kranausleger montiert wird, wobei die Auswahl vorzugsweise auf der Grundlage der vorbestimmten Hubhöhe erfolgt, z. B. so dass die verlagerbare Traverse beim Anheben der Last auf diese vorbestimmte Hubhöhe dicht über einer höchsten Position des Fahrblocks des Leitseilsystems liegt.

2. Verfahren nach Anspruch 1, wobei - zum Bewegen der verlagerbaren Traverse von einer Traversenmontagestelle zu einer anderen Traversenmontagestelle am Kranausleger, z. B. in Vorbereitung auf einen nächsten Hebevorgang - die verlagerbare Traverse von der einen Traversenmontagestelle am Kranausleger demontiert wird, während sie mit dem Führungsseil in Eingriff bleibt, und wobei die verlagerbare Traverse dann entlang des Führungsseils zu der anderen Traversenmontagestelle geschoben wird, wobei die verlagerbare Traverse dann an der anderen Traversenmontagestelle montiert wird.

3. Verfahren nach Anspruch 1 oder 2, wobei der Kranausleger an jeder der mehreren Traversenmontagestellen mit einer Traversenmontagevorrichtung (25-28) für die verlagerbare Traverse (30) versehen ist, wobei die Traversenmontagevorrichtungen entlang der Länge des Kranauslegers beabstandet sind und wobei die verlagerbare Traverse (30) mit einer zusammenwirkenden Montagevorrichtung (31) versehen ist, die das Montieren der verlagerbaren Traverse an einer ausgewählten der mehreren Traversenmontagevorrichtungen ermöglicht.

4. Verfahren nach einem oder mehreren der Ansprüche 1-3, wobei das Leitseilsystem eine oberste Traverse (20) aufweist, die sich von der verlagerbaren Traverse (30) unterscheidet und die an einer festen Position am Kranausleger, näher an einer Spitze des Kranauslegers als den Traversenmontagestellen für die verlagerbare Traverse (30), montiert ist, wobei:
- das obere Ende des Führungsseils an der obersten Traverse befestigt ist oder
- das Führungsseil von der obersten Traverse getragen wird und das obere Ende des Führungsseils an einem Verankerungspunkt am Kranausleger befestigt ist.

5. Verfahren nach einem oder mehreren der Ansprüche 1-4, wobei der Kranausleger eine Mittelebene (4) aufweist und das Leitseilsystem derart ausgelegt ist, dass - an jeder der Montagestellen der verlagerbaren Traverse (30), z. B. wie durch die mehreren Traversenmontagevorrichtungen (25-28) vorgesehen - der seitliche Abstand von der Führungsseilstütze, die durch die verlagerbare Traverse (30) vorgesehen wird, relativ zur Mittelebene gleich ist, wobei z. B. die verlagerbare Traverse (30) dazu ausgelegt ist und betrieben wird, in verschiedene Konfigurationen davon gebracht zu werden, um unterschiedliche Querschnitte, z. B. seitliche Breiten, des Kranauslegers an den verschiedenen Stellen, an denen die verlagerbare Traverse an dem Kranausleger montierbar ist, auszugleichen.

6. Verfahren nach einem oder mehreren der Ansprüche 1-5, wobei die verlagerbare Traverse aus einem Rahmenelement (35) besteht, das mit einem vorderen Hauptgurt (7a) des Kranauslegers verbunden werden soll, z. B. über eine zusammenwirkende Montagevorrichtung (31a, b) mit einer ausgewählten von mehreren Traversenmontagevorrichtungen (25-28), die entlang der Länge des Kranauslegers beabstandet und an einem vorderen Hauptgurt (7a) des Kranauslegers vorgesehen sind, und wobei die verlagerbare Traverse (30) ferner aus einem am Rahmenteil (35) gelenkig befestigten Strebenelement (39) besteht, wobei das Strebenelement mit einem hinteren Hauptgurt des Kranauslegers verbunden werden soll, z. B. über eine jeweilige Montagevorrichtung (31c) davon mit einer ausgewählten von mehreren Traversenmontagevorrichtungen (25-28), die entlang der Länge des Kranauslegers beabstandet und an einem hinteren Hauptgurt des Kranauslegers vorgesehen sind.

7. Kran mit einem Kranausleger mit einer Länge, wobei der Kranausleger mit einem Leitseilsystem zum Steuern der vom Kran angehobenen Last, z. B. einer Windkraftanlagenkomponente, z. B. einem Windkraftanlagenrotorblatt mit horizontaler Ausrichtung, versehen ist,
wobei das Leitseilsystem Folgendes umfasst:
- eine Führungsseilanordnung mit einem Führungsseil (10), das sich entlang des Auslegers erstreckt, wobei das Führungsseil ein unteres Ende und ein oberes Ende aufweist, wobei eine Spannvorrichtung, z. B. eine Spannwinde (11), mit dem unteren Ende oder dem oberen Ende verbunden ist und wobei das andere des unteren und oberen Endes relativ zum Kranausleger befestigt ist,
- eine Leitseilanordnung, die Folgendes umfasst:
- ein Leitseil (15),
- eine Leitseilwinde (16) für das Leitseil,
- einen Fahrblock (17), der am Führungsseil (10) montiert ist, um entlang des Führungsseils zu fahren,
**dadurch gekennzeichnet, dass**
das Leitseilsystem ferner mindestens eine verlagerbare Traverse (30) umfasst, die dazu ausgelegt, an dem Kranausleger montiert zu werden und vom Kranausleger vorzustehen, wobei die verlagerbare Traverse in einem Abstand vom Kranausleger eine Abstützung für das Führungsseil vorsieht,
wobei der Kranausleger mit mehreren Traversenmontagestellen (25-28) versehen ist, die entlang der Länge des Kranauslegers beabstandet sind,
sodass das Leitseilsystem - vor dem Anheben der Last - die Montage der verlagerbaren Traverse (30) an einer ausgewählten der mehreren Traversenmontagestellen am Kranausleger ermöglicht, z. B. so dass die verlagerbare Traverse beim Anheben der Last auf diese vorbestimmte Hubhöhe dicht über einer höchsten Position des Fahrblocks des Leitseilsystems liegt.

8. Kran nach Anspruch 7, wobei - zum Bewegen der verlagerbaren Traverse von einer Traversenmontagestelle zu einer anderen Traversenmontagestelle am Kranausleger, z. B. in Vorbereitung auf einen nächsten Hebevorgang - die verlagerbare Traverse dazu ausgelegt ist, von der einen Traversenmontagestelle am Kranausleger demontiert zu werden, während sie mit dem Führungsseil in Eingriff bleibt, und wobei die verlagerbare Traverse dann entlang des Führungsseils zu der anderen Traversenmontagestelle verschiebbar ist, wobei die verlagerbare Traverse dann an der Traversenmontagestelle montierbar ist.

9. Kran nach Anspruch 7 oder 8, wobei der Kranausleger an jeder der mehreren Traversenmontagestellen mit einer Traversenmontagevorrichtung (25-28) für die verlagerbare Traverse (30) versehen ist, wobei die Traversenmontagevorrichtungen entlang der Länge des Kranauslegers beabstandet sind und wobei die verlagerbare Traverse (30) mit einer zusammenwirkenden Montagevorrichtung (31) versehen ist, die das Montieren der verlagerbaren Traverse an einer ausgewählten der mehreren Traversenmontagevorrichtungen ermöglicht.

10. Kran nach einem oder mehreren der Ansprüche 7-9, wobei das Leitseilsystem eine oberste Traverse (20) aufweist, die sich von der verlagerbaren Traverse (30) unterscheidet und die an einer festen Position am Kranausleger, z. B. näher an einer Spitze des Kranauslegers als den Traversenmontagestellen (25-28) montiert ist, wobei:
- das obere Ende des Führungsseils an der obersten Traverse befestigt ist oder
- das Führungsseil von der obersten Traverse getragen wird und das obere Ende des Führungsseils an einem Verankerungspunkt am Kranausleger befestigt ist.

11. Kran nach einem oder mehreren der Ansprüche 7-10, wobei der Kranausleger eine Mittelebene (4) aufweist und das Leitseilsystem derart ausgelegt ist, dass - an jeder der Montagestellen der verlagerbaren Traverse (30), z. B. wie durch die mehreren Traversenmontagevorrichtungen (25-28) vorgesehen - der seitliche Abstand von der Führungsseilstütze, die durch die verlagerbare Traverse vorgesehen wird, relativ zur Mittelebene gleich ist, wobei z. B. die verlagerbare Traverse (30) dazu ausgelegt ist, in verschiedene Konfigurationen davon gebracht zu werden, um unterschiedliche Querschnitte, z. B. seitliche Breiten, des Kranauslegers an den verschiedenen Montagestellen auszugleichen.

12. Kran nach einem oder mehreren der Ansprüche 7-11, wobei die verlagerbare Traverse (30) aus einem Rahmenelement (35) besteht, das mit einem vorderen Hauptgurt (7a) des Kranauslegers verbunden werden soll, z. B. über eine zusammenwirkende Montagevorrichtung (31a, b) mit einer ausgewählten von mehreren Traversenmontagevorrichtungen (25-28), die entlang der Länge des Kranauslegers beabstandet und an einem vorderen Hauptgurt (7a) des Kranauslegers vorgesehen sind, und wobei die verlagerbare Traverse (30) ferner aus einem am Rahmenteil (35) gelenkig befestigten Strebenelement (39) besteht, wobei das Strebenelement mit einem hinteren Hauptgurt des Kranauslegers verbunden werden soll, z. B. über eine jeweilige Montagevorrichtung (31c) mit einer ausgewählten von mehreren Traversenmontagevorrichtungen (25-28), die entlang der Länge des Kranauslegers beabstandet und an einem hinteren Hauptgurt des Kranauslegers vorgesehen sind.

13. Kran nach einem oder mehreren der Ansprüche 7-12, wobei die verlagerbare Traverse (30) mit einer Öse versehen ist, durch die sich das Führungsseil (10) bei Verwendung des Leiseilsystems erstreckt, z. B. einer geschlossenen Öse oder einer öffenbaren Öse, die ein seitliches Einführen und/oder Entfernen des Führungsseils in die Öse und aus dieser heraus ermöglicht.

14. Kran nach Anspruch 9, wobei die mehreren Traversenmontagevorrichtungen (25-28) jeweils eine oder mehrere Laschen umfassen, die an Hauptgurten des Kranauslegers angebracht sind, wobei die Laschen ein Loch aufweisen, wobei die verlagerbare Traverse mit einer zusammenwirkenden Montagevorrichtung versehen ist, z. B. einer Lasche mit einem Loch, die es ermöglicht, die verlagerbare Traverse an einer ausgewählten der mehreren einzelnen Traversenmontagevorrichtungen zu montieren, z. B. einem Bolzen, der durch die Laschen an dem Hauptgurt und der verlagerbaren Traverse montiert ist.

15. Kran nach einem oder mehreren der Ansprüche 7-14, wobei der Kranausleger parallele vordere und hintere Hauptgurte (7a, 8a) aufweist, die sich entlang einer lateralen Seite davon erstrecken, mit Gitterelementen (9) zwischen der vorderen und hinteren Hauptgurte, wobei das vordere Hauptgurt des Kranauslegers mit mehreren Traversenmontagevorrichtungen versehen ist, die entlang der Länge des Kranauslegers beabstandet sind,
und wobei die verlagerbare Traverse ein A-Rahmenteil (35) mit zwei Schenkelelementen (36), die an einem Scheitel anstoßen, und mindestens ein Traversenelement zwischen den Schenkelelementen umfasst, wobei das A-Rahmenteil, z. B. jedes Schenkelelement davon, - vom Scheitel entfernt - mit einer zusammenwirkenden Montagevorrichtung versehen ist, die an der einen oder den mehreren Traversenmontagevorrichtungen an der vorderen Hauptgurt montierbar ist,
und wobei das hintere Hauptgurt des Kranauslegers mit mehreren Traversenmontagevorrichtungen versehen ist, die entlang der Länge des Kranauslegers beabstandet sind,
und wobei die verlagerbare Traverse ein Stützelement (39) umfasst, das mit dem Scheitel des A-Rahmens an einem Ende davon gekoppelt ist und das entfernt von dem einen Ende mit einer zusammenwirkenden Montagevorrichtung versehen ist, die an der einen oder den mehreren Traversenmontagevorrichtungen an dem hinteren Hauptgurt montierbar ist, zum Beispiel wobei der A-Rahmen an dem Scheitel mit einer Öse oder Klemme für das Führungsseil versehen ist.

## Revendications

1. Procédé pour effectuer une opération de levage, une charge étant levée au moyen d'une grue dotée d'une flèche de grue ayant une longueur, laquelle flèche de grue est pourvue d'un système de câble stabilisateur pour commander la charge qui est levée par la grue, par exemple un élément d'éolienne, par exemple une pale de rotor d'éolienne en orientation horizontale,
le système de câble stabilisateur comprenant :
- un ensemble câble guide doté d'un câble guide (10) s'étendant le long de la flèche, le câble guide présentant une extrémité inférieure et une extrémité supérieure, un dispositif de tensionnement, par exemple un treuil de tensionnement (11), étant relié à l'une de ladite extrémité inférieure et de ladite extrémité supérieure, et l'autre de ladite extrémité inférieure et de ladite extrémité supérieure étant solidement fixée par rapport à la flèche de grue,
- un ensemble câble stabilisateur, comprenant :
- un câble stabilisateur (15),
- un treuil de câble stabilisateur (16) pour le câble stabilisateur,
- un moufle mobile (17) qui est monté sur le câble guide (10) pour se déplacer le long du câble guide,
**caractérisé en ce que**
le système de câble stabilisateur comprend en outre au moins une traverse repositionnable (30) qui est conçue pour être montée sur la flèche de grue et faire saillie de la flèche de grue, laquelle traverse repositionnable fournit, à un certain espacement de la flèche de grue, un support pour le câble guide,
la flèche de grue étant pourvue de multiples emplacements de montage de traverse (25-28) qui sont espacés sur la longueur de la flèche de grue,
la charge devant être levée lors de l'opération de levage à une hauteur de levage prédéfinie,
et - avant le levage de la charge - la traverse repositionnable (30) étant montée sur la flèche de grue à un emplacement choisi parmi les multiples emplacements de montage de traverse, laquelle sélection est, de préférence, effectuée sur la base de la hauteur de levage prédéfinie, par exemple de sorte que la traverse repositionnable se trouve juste au-dessus de la position la plus élevée du moufle mobile du système de câble stabilisateur lorsque la charge est levée à ladite hauteur de levage prédéfinie.

2. Procédé selon la revendication 1, - pour déplacer la traverse repositionnable d'un emplacement de montage de traverse à un autre emplacement de montage de traverse sur la flèche de grue, par exemple en préparation d'une opération de levage suivante - la traverse repositionnable étant démontée d'un emplacement de montage de traverse sur la flèche de grue tout en restant en prise avec le câble guide, et la traverse repositionnable étant ensuite coulissée le long du câble guide jusqu'à l'autre emplacement de montage de traverse, la traverse repositionnable étant ensuite montée sur ledit autre emplacement de montage de traverse.

3. Procédé selon la revendication 1 ou 2, la flèche de grue étant pourvue, au niveau de chacun desdits multiples emplacements de montage de traverse, d'un dispositif de montage de traverse (25-28) pour la traverse repositionnable (30), lesquels dispositifs de montage de traverse sont espacés sur la longueur de la flèche de grue, et la traverse repositionnable (30) étant pourvue d'un dispositif de montage (31) coopérant permettant de monter la traverse repositionnable au niveau d'un dispositif de montage sélectionné parmi les multiples dispositifs de montage.

4. Procédé selon l'une quelconque ou plusieurs des revendications 1 à 3, le système de câble stabilisateur comprenant une traverse supérieure (20) qui est distincte de la traverse repositionnable (30) et qui est montée au niveau d'un emplacement fixe de la flèche de grue, plus près d'une pointe de la flèche de grue que les emplacements de montage de traverse pour la traverse repositionnable (30),
- l'extrémité supérieure du câble guide étant solidement fixée à la traverse supérieure, ou
- le câble guide étant supporté par ladite traverse supérieure et l'extrémité supérieure du câble guide étant solidement fixée à un point d'ancrage sur la flèche de grue.

5. Procédé selon l'une quelconque ou plusieurs des revendications 1 à 4, la flèche de grue présentant un plan central (4) et le système de câble stabilisateur étant conçu de sorte que - au niveau de chacun des emplacements de montage de la traverse repositionnable (30), par exemple tels que fournis par les multiples dispositifs de montage de traverse (25-28) - la distance latérale du support de câble guide fourni par la traverse repositionnable (30) par rapport au plan central soit la même, par exemple, la traverse repositionnable (30) étant conçue et actionnée pour être amenée dans différentes configurations afin de compenser différentes sections transversales, par exemple des largeurs latérales, de la flèche de grue aux divers emplacements où la traverse repositionnable peut être montée sur la flèche de grue.

6. Procédé selon l'une quelconque ou plusieurs des revendications 1 à 5, la traverse repositionnable étant composée d'un élément cadre (35) qui doit être relié à une corde principale avant (7a) de la flèche de grue, par exemple par l'intermédiaire d'un dispositif de montage (31a, b) coopérant jusqu'à un dispositif de montage sélectionné parmi de multiples dispositifs de montage de traverse (25-28) qui sont espacés sur la longueur de la flèche de grue et situés sur une corde principale avant (7a) de la flèche de grue, et la traverse repositionnable (30) étant en outre composée d'un élément de renfort (39) qui est articulé sur l'élément cadre (35), lequel élément de renfort doit être relié à une corde principale arrière de la flèche de grue, par exemple par l'intermédiaire d'un dispositif de montage (31c) respectif de celle-ci jusqu'à un dispositif de montage sélectionné parmi de multiples dispositifs de montage de traverse (25-28) qui sont espacés sur la longueur de la flèche de grue et situés sur une corde principale arrière de la flèche de grue.

7. Grue dotée d'une flèche de grue ayant une longueur, laquelle flèche de grue est pourvue d'un système de câble stabilisateur pour commander une charge levée par la grue, par exemple un élément d'éolienne, par exemple une pale de rotor d'éolienne en orientation horizontale,
le système de câble stabilisateur comprenant :
- un ensemble câble guide doté d'un câble guide (10) s'étendant le long de la flèche, le câble guide présentant une extrémité inférieure et une extrémité supérieure, un dispositif de tensionnement, par exemple un treuil de tensionnement (11), étant relié à l'une de ladite extrémité inférieure et de ladite extrémité supérieure, et l'autre de ladite extrémité inférieure et de ladite extrémité supérieure étant solidement fixée par rapport à la flèche de grue,
- un ensemble câble stabilisateur, comprenant :
- un câble stabilisateur (15),
- un treuil de câble stabilisateur (16) pour le câble stabilisateur,
- un moufle mobile (17) qui est monté sur le câble guide (10) pour se déplacer le long du câble guide,
**caractérisé en ce que**
le système de câble stabilisateur comprend en outre au moins une traverse repositionnable (30) qui est conçue pour être montée sur la flèche de grue et faire saillie de la flèche de grue, laquelle traverse repositionnable fournit, à un certain espacement de la flèche de grue, un support pour le câble guide,
la flèche de grue étant pourvue de multiples emplacements de montage de traverse (25-28) qui sont espacés sur la longueur de la flèche de grue,
de sorte que le système de câble stabilisateur permette, lors de l'utilisation, - avant le levage de la charge - de monter la traverse repositionnable (30) sur la flèche de grue au niveau d'un emplacement sélectionné parmi les multiples emplacements de montage de traverse, par exemple de sorte que la traverse repositionnable se trouve juste au-dessus de la position la plus élevée du moufle mobile du système de câble stabilisateur lorsque la charge est levée à une hauteur de levage prédéfinie.

8. Grue selon la revendication 7, pour déplacer la traverse repositionnable d'un emplacement de montage de traverse à un autre emplacement de montage de traverse sur la flèche de grue, par exemple en préparation d'une opération de levage suivante, la traverse repositionnable étant conçue pour être démontée d'un emplacement de montage de traverse sur la flèche de grue tout en restant en prise avec le câble guide, et la traverse repositionnable pouvant ensuite être coulissée le long du câble guide jusqu'à l'autre emplacement de montage de traverse, la traverse repositionnable pouvant ensuite être montée sur ledit emplacement de montage de traverse.

9. Grue selon la revendication 7 ou 8, la flèche de grue étant pourvue, au niveau de chacun desdits multiples emplacements de montage de traverse, d'un dispositif de montage de traverse (25-28) pour la traverse repositionnable (30), lesquels dispositifs de montage de traverse sont espacés sur la longueur de la flèche de grue, et la traverse repositionnable (30) étant pourvue d'un dispositif de montage (31) coopérant permettant de monter la traverse repositionnable au niveau d'un dispositif de montage sélectionné parmi les multiples dispositifs de montage.

10. Grue selon l'une quelconque ou plusieurs des revendications 7 à 9, le système de câble stabilisateur comprenant une traverse supérieure (20) qui est distincte de la traverse repositionnable (30) et qui est montée au niveau d'un emplacement fixe de la flèche de grue, par exemple plus près d'une pointe de la flèche de grue que les emplacements de montage de traverse (25-28),
- l'extrémité supérieure du câble guide étant solidement fixée à la traverse supérieure, ou
- le câble guide étant supporté par ladite traverse supérieure et l'extrémité supérieure du câble guide étant solidement fixée à un point d'ancrage sur la flèche de grue.

11. Grue selon l'une quelconque ou plusieurs des revendications 7 à 10, la flèche de grue présentant un plan central (4) et le système de câble stabilisateur étant conçu de sorte que - à chacune des positions de montage de la traverse repositionnable (30), par exemple tels que fournis par les multiples dispositifs de montage de traverse (25-28) - la distance latérale du support de câble guide fourni par la traverse repositionnable par rapport au plan central soit la même, par exemple, la traverse repositionnable (30) étant conçue pour être amenée dans différentes configurations afin de compenser une section transversale différente, par exemple une largeur latérale, de la flèche de grue aux divers emplacements de montage.

12. Grue selon l'une quelconque ou plusieurs des revendications 7 à 11, la traverse repositionnable (30) étant composée d'un élément cadre (35) qui doit être relié à une corde principale avant (7a) de la flèche de grue, par exemple par l'intermédiaire d'un dispositif de montage (31a, b) coopérant jusqu'à un dispositif de montage sélectionné parmi de multiples dispositifs de montage de traverse (25-28) qui sont espacés sur la longueur de la flèche de grue et situés sur une corde principale avant (7a) de la flèche de grue, et la traverse repositionnable (30) étant en outre composée d'un élément de renfort (39) qui est articulé sur l'élément cadre (35), lequel élément de renfort doit être relié à une corde principale arrière de la flèche de grue, par exemple par l'intermédiaire d'un dispositif de montage (31c) respectif jusqu'à un dispositif de montage sélectionné parmi de multiples dispositifs de montage de traverse (25-28) qui sont espacés sur la longueur de la flèche de grue et sont situés sur une corde principale arrière de la flèche de grue.

13. Grue selon l'une quelconque ou plusieurs des revendications 7 à 12, la traverse repositionnable (30) étant pourvue d'un œillet à travers lequel le câble guide (10) s'étend lors de l'utilisation du système de câble stabilisateur, par exemple un œillet fermé ou un œillet ouvrable permettant l'insertion et/ou le retrait latéral du câble guide dans et hors de l'œillet.

14. Grue selon la revendication 9, les multiples dispositifs de montage de traverse (25-28) comprenant chacun une ou de multiples pattes ajustées sur les cordes de la flèche de grue, lesquelles pattes comportent un trou, la traverse repositionnable étant pourvue d'un dispositif de montage coopérant, par exemple une patte comportant un trou, permettant de monter la traverse repositionnable au niveau d'un dispositif de montage sélectionné parmi les multiples dispositifs de montage de traverse discrets, par exemple un boulon étant monté à travers les pattes sur la corde et la traverse repositionnable.

15. Grue selon l'une quelconque ou plusieurs des revendications 7 à 14, la flèche de grue comprenant des cordes principales avant et arrière parallèles (7a, 8a) s'étendant le long d'un côté latéral de celle-ci avec des éléments de treillis (9) entre lesdites cordes principales avant et arrière, la corde principale avant de la flèche de grue étant pourvue de multiples dispositifs de montage de traverse espacés sur la longueur de la flèche de grue,
et la traverse repositionnable comprenant une partie cadre A (35) dotée de deux éléments pied (36) contigus au niveau d'un sommet et au moins un élément transversal entre les éléments pied, la partie cadre A, par exemple chaque élément de pied de celle-ci, étant pourvue - à distance du sommet - d'un dispositif de montage coopérant qui peut être monté sur lesdits un ou plusieurs dispositifs de montage de traverse sur la corde principale avant,
et la corde principale arrière de la flèche de grue étant pourvue de multiples dispositifs de montage de traverse espacés sur la longueur de la flèche de grue,
et la traverse repositionnable comprenant un élément de renfort (39) qui est accouplé au sommet du cadre A au niveau d'une extrémité de celui-ci, et qui est pourvu à distance de ladite extrémité d'un dispositif de montage coopérant qui peut être monté sur lesdits un ou plusieurs dispositifs de montage de traverse sur la corde principale arrière, par exemple, le cadre A étant pourvu au niveau du sommet d'un œillet ou d'une pince pour le câble guide.
